# FASCICULE DE BREVET EUROPEEN

(11) **EP 1 091 133 B1**
(45) Date de publication et mention de la délivrance du brevet: **22.08.2007**
(21) Numéro de dépôt: 00420203.2
(22) Date de dépôt: 02.10.2000
(51) Int. Cl.: F16B 7/14

(54) **Ensemble téléscopique réglable en longueur et ses applications**
Längenverstellbare teleskopische Anordnung und ihre Anwendungen
Length adjustable telescopic assembly and its applications

(30) Priorité: 04.10.1999 FR 9912596
(43) Date de publication de la demande: 11.04.2001
(73) Titulaire: Groupe Berchet, 01100 Oyonnax (FR)
(72) Inventeur: Prost, Jean-Francois, 39400 Morez (FR); Pauly, Gilbert, 39130 Blye (FR)
(74) Mandataire: Myon, Gérard Jean-Pierre

(56) Documents cités:
- FR-A- 1 169 899
- FR-A- 2 696 900
- GB-A- 2 179 090
- US-A- 4 277 197
- US-A- 5 823 699

## Description

L'invention a trait à un ensemble télescopique réglable en longueur et à ses applications, notamment dans le domaine des jeux pour enfants, dans celui des tricycles et dans celui des éléments de mobilier.

Dans le domaine des jeux pour enfants, il est connu de fabriquer un tableau avec une face de type ardoise pour une écriture à la craie et/ou une face en matière plastique pour une écriture avec un feutre. Un tableau de ce type peut également être utilisé par un adulte dans le domaine pédagogique ou professionnel en étant, le cas échéant, équipé de feuilles de papier.

Ce genre de tableau est généralement équipé de pieds de longueurs prédéterminés, de sorte que la hauteur du tableau n'est pas forcément adaptée à la taille d'un utilisateur, en particulier lorsqu'il s'agit d'un jeune enfant. Les systèmes connus ne permettent pas d'envisager d'équiper un tel tableau de pieds réglables en hauteur car leur réglage est délicat. En effet, il est difficile de régler la longueur des quatre pieds d'un tableau au point qu'ils portent tous en même temps sur le sol. En outre, les systèmes actuels de pieds ou de mâts télescopiques, ne sont pas capables de résister à des efforts importants, alors qu'un jouet pour enfant doit être prévu pour résister au poids d'un utilisateur dans le cas où un enfant escalade un tableau, par exemple en montant sur un plumier.

GB-A-2 179 090 divulgue une poussette pour enfant dans laquelle un tube interne coulissant dans un tube externe peut être immobilisé par un collier engagé entre ces tubes. Un tel collier impose un écart de diamètre significatif entre les tubes et l'usage d'une garniture de coulissement. Un écrou est prévu pour déformer radialement vers l'intérieur le collier lorsqu'il est vissé sur un filet prévu sur le tube externe qui doit donc être fileté, ce qui impose une étape de fabrication complémentaire de ce tube.

Des problèmes analogues se posent pour d'autres jeux, tels qu'un baby-foot ou un billard, mais également pour des éléments de mobilier tels que des présentoirs, des tables ou des parties de stand d'exposition ou pour des tricycles.

C'est à ces inconvénients qu'entend remédier l'invention en proposant un ensemble télescopique réglable susceptible d'être utilisé dans différents domaines et qui permet un ajustement précis et solide de la longueur d'un pied, mat ou équivalent, tout en étant adapté aux domaines techniques ci-dessus mentionnés.

Dans cet esprit, l'invention concerne un ensemble télescopique réglable en longueur comprenant un tube interne coulissant dans un tube externe, le tube interne étant pourvu de gorges réparties sur sa longueur alors qu'un manchon est disposé à une extrémité du tube externe et se prolonge autour du tube interne, ce manchon étant pourvu d'au moins un relief apte à être engagé dans l'une de ces gorges sous l'effet d'un effort de serrage radial exercé par un écrou Cet ensemble est du type divulgué dans GB-A- 2 179 090. Cet ensemble est caractérisé en ce que le manchon est disposé autour de l'extrémité du tube externe et pourvu d'un filetage externe avec lequel coopère l'écrou.

Grâce à l'invention, un effort de blocage important peut être obtenu par la pénétration partielle du ou des reliefs du manchon dans l'une des gorges, le réglage en longueur obtenu étant alors fermement maintenu. Le fait que des gorges sont espacées sur la longueur de l'un des tubes permet de prévoir un réglage discret ou incrémental de la longueur des pieds d'un tableau. Les différentes longueurs de pied obtenues avec les différentes gorges sont suffisamment différentes pour qu'un utilisateur reconnaisse au premier coup d'oeil ces différentes longueurs et sache reproduire le même réglage sur tous les pieds d'un tableau. Il lui suffit en effet de compter les gorges laissées apparentes sur chaque pied pour vérifier que les pieds sont tous de même longueur.

Selon un premier mode de réalisation de l'invention, le manchon comprend plusieurs languettes élastiques pourvues d'un nez apte à être sélectivement engagé dans l'une des gorges.

Selon un autre mode de réalisation de l'invention, le manchon comprend une douille élastiquement déformable pourvue d'une collerette interne apte à être sélectivement engagée dans l'une des gorges.

Quel que soit le mode de réalisation envisagé, l'ensemble de l'invention peut incorporer une ou plusieurs des caractéristiques suivantes :
- Le manchon forme un épaulement interne d'appui de l'une des extrémités du tube externe.
- Le manchon porte des moyens d'immobilisation en rotation autour des tubes. Ceci permet de serrer l'écrou autour du manchon sans entraîner ce manchon en rotation. On peut prévoir que le manchon porte un relief apte à coopérer avec un relief de forme correspondante prévu sur la surface extérieure du tube externe ou dans un fourreau disposé autour du manchon.
- L'écrou est équipé d'un bord tronconique apte à coopérer avec au moins une surface tronconique externe du manchon ménagée au niveau du ou des reliefs, pour la transmission de l'effort de serrage radial.

L'invention concerne également un jeu pour enfant, tel qu'un tableau, un baby-foot ou un billard, équipé d'au moins un pied télescopique formé par un ensemble tel que précédemment décrit. La hauteur d'un tel jeu peut aisément être adaptée à la taille d'un utilisateur avec l'assurance que des pieds du jeu ont tous la même longueur et que l'ajustement en longueur obtenu est solide.

L'invention concerne également un tricycle pour enfant incluant un cadre réglable, par exemple du type connu de FR-A-2 703 972, ou une canne de guidage, par exemple du type connu de FR-A-2 759 126, et incorporant un ensemble télescopique tel que précédemment décrit.

L'invention concerne en outre un élément de mobilier, tel qu'un présentoir, un tableau, une table ou une partie d'un stand d'exposition, équipé d'au moins un pied ou une traverse télescopique formé par un ensemble tel que précédemment décrit. Un tel élément de mobilier est aisé à adapter à sa configuration d'utilisation, par exemple au volume dans lequel il doit être installé.

L'invention concerne enfin un tableau de jeu pour enfant comprenant au moins une face d'écriture et des pieds supportant cette face dont les pieds sont réglables en hauteur grâce à un ensemble incrémental de verrouillage par coopération de formes tel que mentionné ci-dessus. Le caractère incrémental du réglage permet à un utilisateur d'ajuster la longueur des différents pieds à une valeur permettant leur appui simultané sur un sol globalement plan.

L'invention sera mieux comprise et d'autres avantages de celle-ci apparaîtront plus clairement à la lumière de la description qui va suivre d'un mode de réalisation d'un ensemble télescopique réglable conforme à son principe et d'une de ses utilisations, donnée uniquement à titre d'exemple et faite en référence aux dessins annexés dans lesquels :
- la figure 1 est une représentation de principe en perspective d'un tableau de jeu pour enfant conforme à l'invention ;
- la figure 2 est une coupe selon la ligne II-II à la figure 1 et
- la figure 3 est une vue en perspective d'un manchon de verrouillage utilisé dans le dispositif des figures 1 et 2.

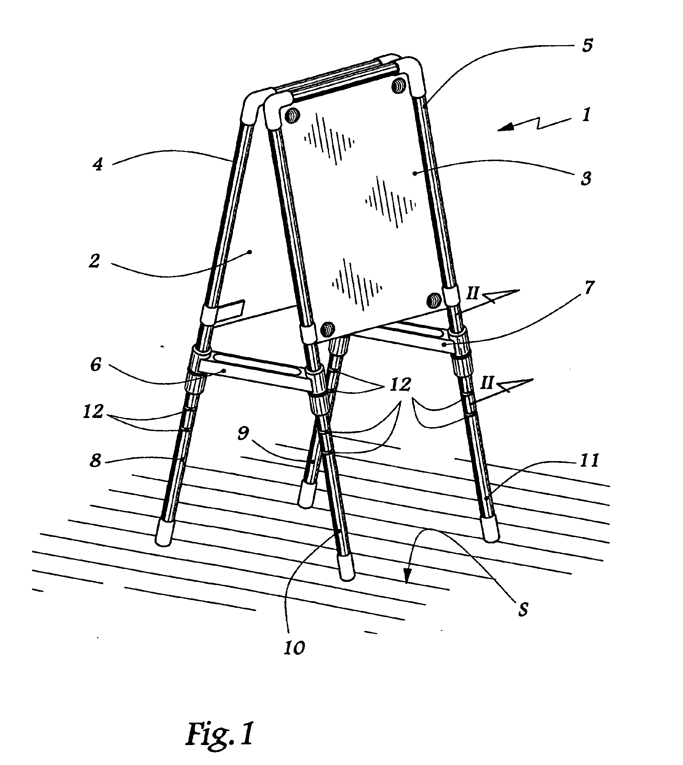

Le tableau 1 représenté à la figure 1 forme deux faces d'écriture 2 et 3 supportées chacune par un cadre 4 ou 5 constitué de tubes métalliques ou en matière plastique.

Deux plumiers 6 et 7 permettent de maintenir les cadres 4 et 5 en position l'un par rapport à l'autre en assurant l'écartement des quatre pieds 8, 9, 10 et 11 du tableau 1 en appui sur la surface du sol S supposée plane et horizontale.

Les pieds 8 à 11 sont équipés de gorges 12 aisément repérables par un utilisateur qui peut se servir de ces gorges comme de repères visuels pour l'ajustement en longueur des pieds 8 à 11.

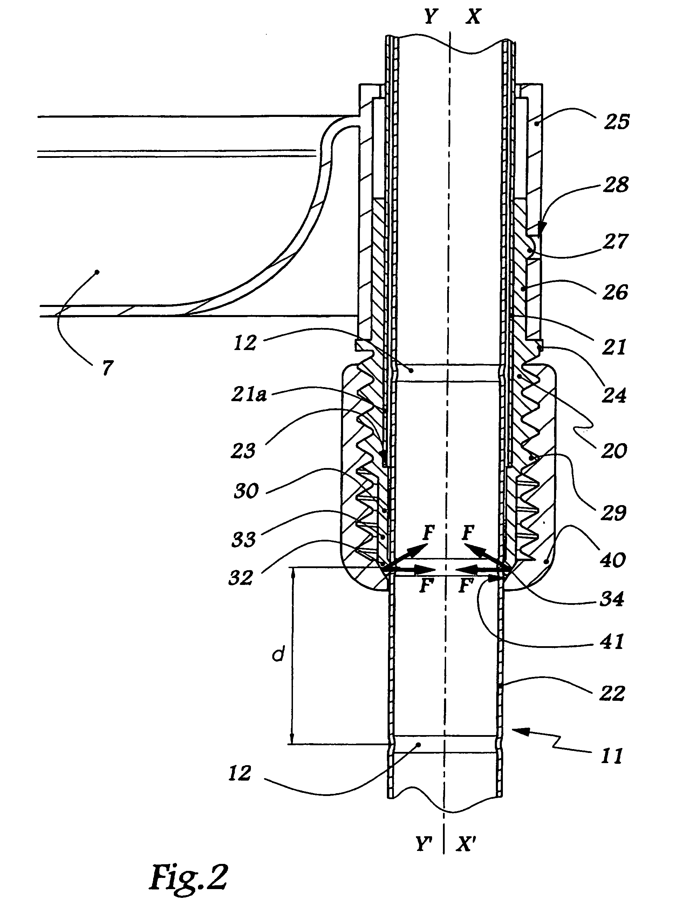

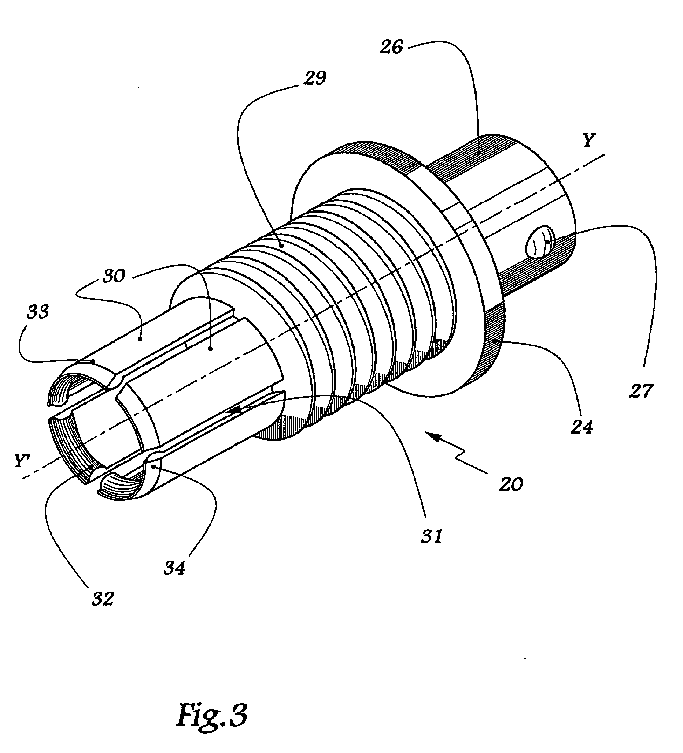

Le dispositif utilisé pour l'ajustement en longueur du pied 11 est plus particulièrement visible à la figure 2. Il comprend un manchon 20, également représenté à la figure 3, prévu pour être disposé autour de l'extrémité inférieure 21a d'un tube 21 appartenant au cadre 5. Ce tube 21 reçoit un autre tube 22 dans son volume intérieur, le tube 22 étant apte à coulisser à l'intérieur du tube 21 selon la direction d'un axe X-X' commun à ces tubes.

Les pieds 8, 9 et 10 sont analogues au pied 11 et comportent chacun deux tubes engagés l'un dans l'autre et un système de blocage analogue à celui du pied 11.

Les gorges 12 sont régulièrement réparties le long d'une partie au moins du tube 22 et l'on note d la distance séparant deux gorges adjacentes.

Le manchon 20 forme un épaulement interne 23 d'appui de l'extrémité 21a, de telle sorte qu'il est bloqué en translation vers le haut de la figure 2.

Le manchon 20 est également équipé d'une collerette externe 24 formant zone de réception et de butée pour un fourreau 25 constituant l'extrémité du plumier 7. Le manchon 20 comprend une partie cylindrique 26 prévue pour être engagée entre le tube 21 et le fourreau 25. Un pion 27 prévu sur la partie 26 s'étend radialement vers l'extérieur du manchon 20 et est prévu pour s'engager dans un trou 28 de forme correspondante ménagé dans le fourreau 25. Ainsi, le manchon 20 est immobilisé en rotation autour de l'axe X-X' car le plumier 7 est immobilisé par son ancrage sur les pieds 9 et 11.

Selon une variante non représentée de l'invention, le manchon 20 peut être immobilisé en rotation autour de l'axe X-X' par coopération de formes avec le tube 21, la surface interne de la partie 26 pouvant comporter au moins un relief apte à coopérer avec au moins un relief correspondant prévu sur la surface extérieure du tube 21. On peut également prévoir que la partie 26 est fendue longitudinalement et apte à coopérer avec une nervure interne longitudinale du fourreau 25. D'autres moyens d'immobilisation en rotation du fourreau 20 peuvent également être envisagés.

Le fourreau 20 est équipé d'un filetage externe 29 situé à l'opposé de la partie 26 par rapport à la collerette 24. Ce filetage se prolonge par quatre languettes 30 séparées par des fentes 31 et pourvues chacune d'un nez 32 pouvant être engagé dans l'une des gorges 12.

Comme le manchon 20 est réalisé en matière plastique, les languettes 30 sont élastiques et peuvent s'expandre radialement en particulier au niveau de leurs extrémités respectives 33 qui portent les nez 32. En pratique les nez 32 sont formés par un jonc annulaire façonné sur la face interne des languettes 30 et interrompu au niveau des fentes 31.

Au niveau de leurs extrémités 33, les languettes 30 forment chacune une surface tronconique 34 centrée sur l'axe central Y-Y' du manchon 20 destiné à être confondu avec l'axe X-X' dans la configuration représentée à la figure 2. Les surfaces 34 sont convergentes à l'opposé de la collerette 24.

Un écrou 40 est prévu pour être vissé sur le filetage 29 et comprend une surface tronconique interne 41 apte à venir en appui sur les surfaces 34 des languettes 30. Ainsi, lors du serrage de l'écrou 40 sur le filetage 29, un effort F normal aux surfaces 41 et 34 est exercé, cet effort ayant une composante radiale F' centripète centrée vers l'axe X-X'. L'effort de serrage de l'écrou 40 permet donc d'immobiliser les nez 32 dans l'une des gorges 12 ce qui permet un maintien du pied 11 et des pieds équivalents à la longueur souhaitée.

Selon une variante non représentée de l'invention, les languettes 30 peuvent être remplacées par une douille élastiquement déformable selon une direction radiale qui est pourvue d'une collerette interne pouvant être engagée dans l'une des gorges 12, cette collerette étant également prévue pour coopérer avec l'écrou 40 afin d'obtenir un serrage efficace de sa collerette dans la gorge considérée.

Dans le cas d'un tableau de jeu pour enfant, la distance d entre les gorges 12 peut être de l'ordre de 5 cm, ce qui permet un réglage en hauteur du tableau 1 par palier de 5 cm, au fait près que les pieds 8 à 11 sont inclinés. Il est ainsi aisé pour un utilisateur d'utiliser le caractère incrémental du dispositif de l'invention pour ajuster la longueur des pieds 8 à 11 sans procéder à des mesures précises mais simplement en comptant le nombre de gorges 12 apparentes en dessous de chacun des écrous 40.

L'invention est applicable à d'autres jeux pour enfant susceptibles d'être équipés de pieds réglables en hauteur, tels qu'un baby-foot ou un billard, mais également à un tricycle, pourvu d'un cadre réglable ou d'une canne de guidage par un adulte, ou à un bâton de marche, voire à des éléments de camping.

L'invention trouve une application particulière dans le domaine du mobilier et peut concerner, notamment, un présentoir, un tableau, une table ou une partie d'un stand d'exposition qui comprend un pied ou une traverse formée de deux tubes engagés l'un dans l'autre et immobilisés par un système tel que précédemment décrit.

## Revendications

1. Ensemble télescopique réglable en longueur comprenant un tube interne (22) coulissant dans un tube externe (21), ledit tube interne étant pourvu de gorges (12) réparties sur sa longueur (X-X') et un manchon (20) est disposé à une extrémité (21a) dudit tube externe et se prolongeant autour dudit tube interne, ledit manchon étant pourvu d'au moins un relief (32) apte à être engagé dans l'une desdites gorges sous l'effet d'un effort de serrage radial (F, F') exercé par un écrou (40), **caractérisé en ce que** ledit manchon (20) est disposé autour de l'extrémité (21a) du tube externe (21) et pourvu d'un filetage externe (29) avec lequel coopère ledit écrou (40).

2. Ensemble télescopique selon la revendication 1, **caractérisé en ce que** ledit manchon comprend plusieurs languettes élastiques (30) pourvues d'un nez (32) apte à être sélectivement engagé dans l'une desdites gorges (12).

3. Ensemble télescopique selon la revendication 1, **caractérisé en ce que** ledit manchon (30) comprend une douille élastiquement déformable pourvue d'une collerette interne apte à être sélectivement engagée dans l'une desdites gorges.

4. Ensemble télescopique selon l'une des revendications précédentes, **caractérisé en ce que** ledit manchon (20) forme un épaulement interne (23) d'appui de ladite extrémité (21a) dudit tube externe (21).

5. Ensemble télescopique selon l'une des revendications précédentes, **caractérisé en ce que** ledit manchon (20) porte des moyens (27) d'immobilisation en rotation autour desdits tubes (21, 22).

6. Ensemble télescopique selon la revendication 5, **caractérisé en ce que** ledit manchon (20) porte un relief (27) apte à coopérer avec un relief de forme correspondante (28) prévu sur la surface extérieure dudit tube externe (21) ou dans un fourreau (25) disposé autour dudit manchon.

7. Ensemble télescopique selon l'une des revendications précédentes, **caractérisé en ce que** ledit écrou (40) est équipé d'un bord tronconique (41) apte à coopérer avec au moins une surface tronconique (34) externe dudit manchon ménagée au niveau dudit ou desdits reliefs, pour la transmission dudit effort (F, F') de serrage radial.

8. Jeu pour enfant, notamment tableau (1), baby-foot ou billard équipé d'au moins un pied télescopique (8-11) formé par un ensemble selon l'une des revendications précédentes.

9. Tricycle pour enfant incluant un cadre réglable ou une canne de guidage incorporant un ensemble selon l'une des revendications 1 à 7.

10. Elément de mobilier, notamment présentoir, tableau, table ou partie de stand d'exposition, équipé d'au moins un pied ou une traverse télescopique formé par un ensemble selon l'une des revendications 1 à 7.

11. Tableau de jeu pour enfant (1) comprenant au moins une face d'écriture (2, 3) et des pieds (8-11) supportant cette face, **caractérisé en ce que** lesdits pieds sont réglables en hauteur grâce à un ensemble incrémental (12-41) de verrouillage par coopération de formes, ledit ensemble étant conforme à l'une des revendications 1 à 7.

## Claims

1. Telescopic assembly with an adjustable length, comprising an inner tube (22) which slides in an outer tube (21), the inner tube being provided with grooves (12) which are distributed along its length (X-X'), and a sleeve (20) is disposed at one end (21a) of the said outer tube, and extends around the said inner tube, the said sleeve being provided with at least one relief (32) which can be engaged in one of the said grooves, under the effect of a radial tightening force (F, F') which is exerted by a nut (40), **characterised in that** the said sleeve (20) is disposed around the end (21a) of the outer tube (21), and is provided with an outer thread (29) with which the said nut (40) co-operates.

2. Telescopic assembly according to claim 1, **characterised in that** the said sleeve comprises a plurality of resilient tongues (30) provided with a nose (32) which can be engaged selectively in one of the grooves (12).

3. Telescopic assembly according to claim 1, **characterised in that** the said sleeve (30) comprises a resiliently deformable bush provided with an inner flange which can be engaged selectively in one of the said grooves.

4. Telescopic assembly according to one of the preceding claims, **characterised in that** the said sleeve (20) forms an inner shoulder (23) to support the said end (21a) of the said outer tube (21).

5. Telescopic assembly according to one of the preceding claims **characterised in that** the said sleeve (20) supports means (27) for immobilisation in rotation around the said tubes (21, 22).

6. Telescopic assembly according to claim 5, **characterised in that** the said sleeve (20) has a relief (27) which can co-operate with a relief with a corresponding form (28) provided on the outer surface of the said outer tube (21), or in a sheath (25) which is disposed around the said sleeve.

7. Telescopic assembly according to one of the preceding claims, **characterised in that** the said nut (40) is equipped with a frusto-conical edge (41) which can co-operate with at least one outer frusto-conical surface (34) of the said sleeve provided at the level of the said relief(s), for transmission of the said radial tightening force (F, F').

8. Child's game, in particular a board (1), table football or billiards, equipped with at least one telescopic foot (8-11) formed by an assembly according to one of the preceding claims.

9. Child's tricycle which includes an adjustable frame, or a steering stick, and incorporating an assembly according to one of claims 1 to 7.

10. Furniture element, in particular a display unit, a board, a table or part of a exhibition stand, equipped with at least one foot or a telescopic cross-member formed by an assembly according to one of claims 1 to 7.

11. Child's play board (1) comprising at least one writing surface (2, 3) and feet (8-11) which support this surface, **characterised in that** the height of the said feet is adjustable by means of an incremental locking assembly (12-41), by cooperation of forms, the said assembly being in accordance with one of claims 1 to 7.

## Patentansprüche

1. Längenverstellbare teleskopische Anordnung, ein Innenrohr (22) umfassend, das in einem Außenrohr (21) gleitet, wobei das Innenrohr mit Rillen (12) versehen ist, die über seine Länge (X-X') verteilt sind, und eine Verbindungsmuffe (20) an einem Ende (21a) des Außenrohres angeordnet ist und um das Innenrohr herum verlängert ist, wobei die Verbindungsmuffe mit mindestens einem Relief (32) versehen ist, welches in der Lage ist, unter Einwirkung einer radialen Spannkraft (F, F'), die von einer Mutter (40) ausgeübt wird, mit einer der Rillen in Eingriff gebracht zu werden, **dadurch gekennzeichnet, dass** die Verbindungsmuffe (20) um das Ende (21a) des Außenrohres (21) herum angeordnet ist und mit einem Außengewinde (29) versehen ist, mit welchem die Mutter (40) zusammenarbeitet.

2. Teleskopische Anordnung nach Anspruch 1, **dadurch gekennzeichnet, dass** die Verbindungsmuffe mehrere elastische Zungen (30) umfasst, die mit einer Nase (32) versehen sind, die in der Lage ist, wahlweise mit einer der Rillen (12) in Eingriff gebracht zu werden.

3. Teleskopische Anordnung nach Anspruch 1, **dadurch gekennzeichnet, dass** die Verbindungsmuffe (20) eine elastisch verformbare Buchse umfasst, die mit einem inneren Flansch versehen ist, der in der Lage ist, wahlweise mit einer der Rillen in Eingriff gebracht zu werden.

4. Teleskopische Anordnung nach einem der vorhergehenden Ansprüche, **dadurch gekennzeichnet, dass** an der Verbindungsmuffe (20) ein innerer Absatz (23) zur Auflage für das Ende (21a) des Außenrohres (21) ausgebildet ist.

5. Teleskopische Anordnung nach einem der vorhergehenden Ansprüche, **dadurch gekennzeichnet, dass** die Verbindungsmuffe (20) um die Rohre (21, 22) herum Mittel (27) zum Blockieren der Drehung aufweist.

6. Teleskopische Anordnung nach Anspruch 5, **dadurch gekennzeichnet, dass** die Verbindungsmuffe (20) ein Relief (27) aufweist, welches in der Lage ist, mit einem Relief entsprechender Gestalt (28) zusammenzuarbeiten, das auf der Außenseite des Außenrohres (21) oder in einer Hülse (25) vorgesehen ist, die um die Verbindungsmuffe herum angeordnet ist.

7. Teleskopische Anordnung nach einem der vorhergehenden Ansprüche, **dadurch gekennzeichnet, dass** die Mutter (40) mit einem kegelstumpfförmigen Rand (41) ausgestattet ist, der in der Lage ist, mit mindestens einer äußeren kegelstumpfförmigen Fläche (34) der Verbindungsmuffe zusammenzuarbeiten, welche in Höhe des oder der Reliefs für die Übertragung der radialen Spannkraft (F, F') ausgebildet ist.

8. Spiel für Kinder, insbesondere eine Tafel (1), ein Tischfußballspiel oder ein Billardtisch, die/der mit mindestens einem teleskopischen Fuß (8 bis 11) ausgestattet ist, der durch eine Anordnung nach einem der vorhergehenden Ansprüche ausgebildet ist.

9. Dreirad für Kinder, einen einstellbaren Rahmen oder eine Führungsstange einschließend, in die eine Anordnung nach einem der Ansprüche 1 bis 7 eingebaut ist.

10. Möbelstück, insbesondere ein Verkaufsständer, eine Tafel, ein Tisch oder ein Teil eines Ausstellungsstands, das mit mindestens einem Fuß oder einem teleskopischen Querbalken ausgestattet ist, der durch eine Anordnung nach einem der Ansprüche 1 bis 7 ausgebildet ist.

11. Spieltafel für Kinder (1), mindestens eine Fläche zum Schreiben (2, 3) und Füße (8 bis 11) umfassend, welche diese Fläche tragen, **dadurch gekennzeichnet, dass** die Füße aufgrund einer inkrementellen Anordnung (12 bis 41) mit formschlüssiger Verriegelung höhenverstellbar sind, wobei die Anordnung einem der Ansprüche 1 bis 7 entspricht.
